(19) Europäisches Patentamt
European Patent Office
Office européen des brevets

(11) EP 1 201 127 B1

(12) EUROPÄISCHE PATENTSCHRIFT

(45) Veröffentlichungstag und Bekanntmachung des Hinweises auf die Patenterteilung:
**31.03.2004 Patentblatt 2004/14**

(51) Int Cl.[7]: **A01N 43/40**
// (A01N43/40, 37:52)

(21) Anmeldenummer: **01129796.7**

(22) Anmeldetag: **15.12.1998**

# (54) Fungizide Mischungen auf der Basis von Pyridincarboxamidverbindungen

Fungicidal mixtures based on pyridine carboxamide compounds

Mélanges fongicides à base de composés pyridine carboxamide

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **18.12.1997 DE 19756380**

(43) Veröffentlichungstag der Anmeldung:
**02.05.2002 Patentblatt 2002/18**

(62) Dokumentnummer(n) der früheren Anmeldung(en) nach Art. 76 EPÜ:
**98966621.9 / 1 041 881**

(73) Patentinhaber: **BASF AKTIENGESELLSCHAFT**
**67056 Ludwigshafen (DE)**

(72) Erfinder:
- **Schelberger, Klaus**
**67161 Gönnheim (DE)**
- **Scherer, Maria**
**76829 Landau (DE)**
- **Eicken, Karl, Dr.**
**67157 Wachenheim (DE)**
- **Hampel, Manfred, Dr.**
**67435 Neustadt (DE)**
- **Ammermann, Eberhard, Dr.**
**64646 Heppenheim (DE)**
- **Lorenz, Gisela, Dr.**
**67434 Hambach Hambach (DE)**
- **Strathmann, Siegfried, Dr.**
**67117 Limburgerhof (DE)**

(56) Entgegenhaltungen:
**EP-A- 0 256 503**
**EP-A- 0 545 099**
**EP-A- 0 805 148**
**WO-A-97/10716**
**WO-A-97/39628**
**WO-A-97/46096**
**WO-A-97/46097**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 201 127 B1

## Beschreibung

Die vorliegende Erfindung betrifft fungizide Mischungen zur 3e-kämpfung von Schadpilzen, die

a) Amidverbindungen der Formel I

$$A\text{-}CO\text{-}NR^1R^2 \qquad (I)$$

worin

A für eine Arylgruppe oder einen aromatischen oder nicht-aromatischen, 5- oder 6-gliedrigen Heterocyclus, der 1 bis 3 Heteroatome aufweist, die ausgewählt sind unter O, N und S, steht;

wobei die Arylgruppe oder der Heterocyclus gegebenenfalls 1, 2 oder 3 Substituenten aufweisen kann, die unabhängig voneinander ausgewählt sind unter Alkyl, Halogen, $CHF_2$, $CF_3$, Alkoxy, Halogenalkoxy, Alkylthio, Alkylsulfinyl und Alkylsulfonyl;

$R^1$ für ein Wasserstoffatom steht;

$R^2$ für eine Phenyl- oder Cycloalkylgruppe steht, die gegebenenfalls 1, 2 oder 3 Substituenten aufweist, die ausgewählt sind unter Alkyl, Alkenyl, Alkinyl, Alkoxy, Alkenyloxy, Alkinyloxy, Cycloalkyl, Cycloalkenyl, Cycloalkyloxy, Cycloalkenyloxy, Phenyl und Halogen, wobei die aliphatischen und cycloaliphatischen Reste partiell oder vollständig halogeniert sein können und/oder die cycloaliphatischen Reste durch 1 bis 3 Alkylgruppen substituiert sein können und wobei die Phenylgruppe 1 bis 5 Halogenatome und/oder 1 bis 3 Substituenten aufweisen kann, die unabhängig voneinander ausgewählt sind unter Alkyl, Halogenalkyl, Alkoxy, Halogenalkoxy, Alkylthio und Halogenalkylthio, und wobei die amidische Phenylgruppe mit einem gesättigten, 5-gliedrigen Ring kondensiert sein kann, der gegebenenfalls durch eine oder mehrere Alkylgruppen substituiert ist und/oder ein Heteroatom, ausgewählt unter O, und S, aufweisen kann,

und

b) Verbindungen der Formel III

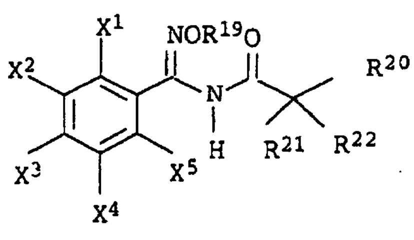

(III)

wobei die Substituenten $X^1$ bis $X^5$ und $R^{19}$ bis $R^{22}$ folgende Bedeutung haben:

$X^1$ bis $X^5$ unabhängig voneinander Wasserstoff, Halogen, $C_1$-$C_4$-Alkyl, $C_1$-$C_4$-Halogenalkyl, $C_1$-$C_4$-Alkoxy, $C_1$-$C_4$-Halogenalkoxy, $C_1$-$C_4$-Alkylthio, $C_1$-$C_4$-Thioalkoxy, $C_1$-$C_4$-Sulfonylalkyl, Nitro, Amino, N-$C_1$-$C_4$-Carboxylamino, N-$C_1$-$C_4$-Alkylamino;

$R^{19}$ $C_1$-$C_4$-Alkyl, $C_2$-$C_4$-Alkenyl, $C_2$-$C_4$-Alkinyl, $C_1$-$C_4$-Alkyl-$C_3$-$C_7$-Cycloalkyl, wobei diese Reste Substituenten ausgewählt aus Halogen, Cyano, und $C_1$-$C_4$-Alkoxy tragen können

$R^{20}$ einen Phenylrest oder einen 5- oder 6-gliedrigen gesättigten oder ungesättigten Heterocyclylrest mit mindestens einem Heteroatom ausgewählt aus der Gruppe N, O und S, wobei die cyclischen Reste einen bis drei Substituenten ausgewählt aus der Gruppe aus Halogen, $C_1$-$C_4$-Alkyl, $C_1$-$C_4$-Alkoxy, $C_1$-$C_4$-Halogenalkyl, $C_1$-$C_4$-Halogenalkoxy, $C_1$-$C_4$-Alkoxy-$C_2$-$C_4$-Alkenyl, $C_1$-$C_4$-Alkoxy-$C_2$-$C_4$-Alkinyl aufweisen können,

$R^{21}$ und $R^{22}$ unabhängig voneinander Wasserstoff, $C_1$-$C_4$-Alkyl, $C_1$-$C_4$-Alkoxy, $C_1$-$C_4$-Alkylthio, N-$C_1$-$C_4$-Alkylamino, $C_1$-$C_4$-Halogenalkyl oder $C_1$-$C_4$-Halogenalkoxy

in einer synergistisch wirksamen Menge enthalten.

Die Amidverbindungen der Formel I sind an sich bekannt und in der Literatur beschrieben (EP-A 545 099).

In der WO 97/08952 werden fungizide Mischungen beschrieben, die neben Verbindungen der Formel I noch Fenazaquin als weitere Komponenten enthalten. Diese werden als gut wirksam gegen Botrytis beschrieben.

Die Verbindungen der Formel III sowie Verfahren zu deren Herstellung sind in der WO-A 96/19442 beschrieben. Die bakterizide Wirkung der Verbindungen III wird in den Schriften WO-97/46096 und WO-A 97/46097 beschrieben.

Im Hinblick auf eine Senkung der Aufwandmengen und eine Verbesserung des Wirkungsspektrums der bekannten Verbindungen lagen der vorliegenden Erfindungen Mischungen zugrunde, die bei verringerter Gesamtmenge an ausgebrachten Wirkstoffen eine verbesserte Wirkung gegen Schadpilzen aufweisen (synergistische Mischungen).

Demgemäß wurden die eingangs definierten Mischungen gefunden. Es wurde außerdem gefunden, daß sich bei gleichzeitiger, und zwar gemeinsamer oder getrennter Anwendung der Verbindungen I und III oder bei Anwendung der Verbindungen I und III nacheinander Schadpilze besser bekämpfen lassen, als mit den Verbindungen I oder III allein.

Die erfindungsgemäßen Mischungen wirken synergistisch und sind daher zur Bekämpfung von Schadpilzen und insbesondere von echten Mehltaupilzen in Gemüse, Reben und Getreide besonders geeignet.

Im Rahmen der vorliegenden Erfindung steht Halogen für Fluor, Chlor, Brom und Jod und insbesondere für Fluor, Chlor und Brom.

Der Ausdruck "Alkyl" umfaßt geradkettige und verzweigte Alkylgruppen. Vorzugsweise handelt es sich dabei um geradkettige oder verzweigte $C_1$-$C_{12}$-Alkyl- und insbesondere $C_1$-$C_6$-Alkylgruppen. Beispiele für Alkylgruppen sind Alkyl wie insbesondere Methyl, Ethyl, Propyl, 1-Methylethyl, Butyl, 1-Methylpropyl, 2-Methylpropyl 1,1-Dimethylethyl, n-Pentyl, 1-Methylbutyl, 2-Methylbutyl, 3-Methylbutyl, 1,2-Dimethylpropyl, 1,1-Dimethylpropyl, 2,2-Dimethylpropyl, 1-Ethylpropyl, n-Hexyl, 1-Methylpentyl, 2-Methylpentyl, 3-Methylpentyl, 4-Methylpentyl, 1,2-Dimethylbutyl, 1,3-Dimethylbutyl, 2,3-Dimethylbutyl, 1,1-Dimethylbutyl, 2,2-Dimethylbutyl, 3,3-Dimethylbutyl, 1,1,2-Trimethylpropyl, 1,2,2-Trimethylpropyl, 1-Ethylbutyl, 2-Ethylbutyl, 1-Ethyl-2-methylpropyl, n-Heptyl, 1-Methylhexyl, 1-Ethylpentyl, 2-Ethylpentyl, 1-Propylbutyl, Octyl, Decyl, Dodecyl.

Halogenalkyl steht für eine wie oben definierte Alkylgruppe, die mit einem oder mehreren Halogenatomen, insbesondere Fluor und Chlor, teilweise oder vollständig halogeniert ist. Vorzugsweise sind 1 bis 3 Halogenatome vorhanden, wobei die Difluormethan/oder die Trifluormethylgruppe besonders bevorzugt ist.

Die obigen Ausführungen zur Alkylgruppe und Halogenalkylgruppe gelten in entsprechender Weise für die Alkyl- und Halogenalkylgruppe in Alkoxy, Halogenalkoxy, Alkylthio, Halogenalkylthio, Alkylsulfinyl und Alkylsulfonyl.

Die Alkenylgruppe umfaßt geradkettige und verzweigte Alkenylgruppen. Vorzugsweise handelt es sich dabei um geradkettige oder verzweigte $C_3$-$C_{12}$-Alkenylgruppen und insbesondere $C_3$-$C_6$-Alkenylgruppen. Beispiele für Alkenylgruppen sind 2-Propenyl, 2-Butenyl, 3-Butenyl, 1-Methyl-2-propenyl, 2-Methyl-2-propenyl, 2-Pentenyl, 3-Pentenyl, 4-Pentenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-2-propenyl, 1-Ethyl-2-propenyl, 2-Hexenyl, 3-Hexenyl, 4-Hexenyl, 5-Hexenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3-pentenyl, 3-Methyl-3-pentenyl, 4-Methyl-3-pentenyl, 1-Methyl-4-pentenyl, 2-Methyl-4-pentenyl, 3-Methyl-4-pentenyl, 4-Methyl-4-pentenyl, 1,1-Dimethyl-2-butenyl, 1,1-Dimethyl-3-butenyl, 1,1-Dimethyl-3-butenyl, 1,2-Dimethyl-2-butenyl, 1,2-Dimethyl-3-butenyl, 1,3-Dimethyl-2-butenyl, 1,3-Dimethyl-3-butenyl, 2,2-Dimethyl-3-butenyl, 2,3-Dimethyl-2-butenyl, 2,3-Dimethyl-3-butenyl, 1-Ethyl-2-butenyl, 1-Ethyl-3-butenyl, 2-Ethyl-2-butenyl, 2-Ethyl-3-butenyl, 1,1,2-Trimethyl-2-propenyl, 1-Ethyl-1-methyl-2-propenyl und 1-Ethyl-2-methyl-2-propenyl, insbesondere 2-Propenyl, 2-Butenyl, 3-Methyl-2-butenyl und 3-Methyl-2-pentenyl.

Die Alkenylgruppe kann mit einem oder mehreren Halogenatomen, insbesondere Fluor und Chlor, partiell oder vollständig halogeniert sein. Vorzugsweise weist sie 1 bis 3 Halogenatome auf.

Die Alkinylgruppe umfaßt geradkettige und verzweigte Alkinylgruppen. Vorzugsweise handelt es sich dabei um geradkettige und verzweigte $C_3$-$C_{12}$-Alkinylgruppen und insbesondere $C_3$-$C_6$-Alkinylgruppen. Beispiele für Alkinylgruppen sind 2-Propinyl, 2-Butinyl, 3-Butinyl, 1-Methyl-2-propinyl, 2-Pentinyl, 3-Pentinyl, 4-Pentinyl, 1-Methyl-3-butinyl, 2-Methyl-3-butinyl, 1-Methyl-2-butinyl, 1,1-Dimethyl-2-propinyl, 1-Ethyl-2-propinyl, 2-Hexinyl, 3-Hexinyl, 4-Alkinyl,

5-Hexinyl, 1-Methyl-2-pentinyl, 1-Methyl-3-pentinyl, 1-Methyl-4-pentinyl, 2-Methyl-3-pentinyl, 2-Methyl-4-pentinyl, 3-Methyl-4-pentinyl, 4-Methyl-2-pentinyl, 1,2-Dimethyl-2-butinyl, 1,1-Dimethyl-3-butinyl, 1,2-Dimethyl-3-butinyl, 2,2-Dimethyl-3-butinyl, 1-Ethyl-2-butinyl, 1-Ethyl-3-butinyl, 2-Ethyl-3-butinyl und 1-Ethyl-1-methyl-2-propinyl.

Die obigen Ausführungen zur Alkenylgruppe und deren Halogensubstituenten sowie zur Alkinylgruppe gelten in entsprechender Weise für Alkenyloxy und Alkinyloxy.

Bei der Cycloalkylgruppe handelt es sich vorzugsweise um eine $C_3$-$C_6$-Cycloalkylgruppe, wie Cyclopropyl, Cyclobutyl, Cyclopentyl oder Cyclohexyl. Wenn die Cycloalkylgruppe substituiert ist, weist sie vorzugsweise 1 bis 3 $C_1$-$C_4$-Alkylreste als Substituenten auf.

Cycloalkenyl steht vorzugsweise für eine $C_4$-$C_6$-Cycloalkenylgruppe, wie Cyclobutenyl, Cyclopentenyl oder Cyclohexenyl. Wenn die Cycloalkenylgruppe substituiert ist, weist sie vorzugsweise 1 bis 3 $C_1$-$C_4$-Alkylreste als Substituenten auf.

Bei einer Cycloalkoxygruppe handelt es sich vorzugsweise um eine $C_5$-$C_6$-Cycloalkoxygruppe, wie Cyclopentyloxy oder Cyclohexyloxy. Wenn die Cycloalkoxygruppe substituiert ist, weist sie vorzugsweise 1 bis 3 $C_1$-$C_4$-Alkylreste als Substituenten auf.

Bei der Cycloalkenyloxygruppe handelt es sich vorzugsweise um eine $C_5$-$C_6$-Cycloalkenyloxygruppe, wie Cyclopentyloxy oder Cyclohexyloxy. Wenn die Cycloalkenyloxygruppe substituiert ist, weist sie vorzugsweise 1 bis 3 $C_1$-$C_4$-Alkylreste als Substituenten auf.

Aryl steht vorzugsweise für Phenyl.

Wenn A für eine Phenylgruppe steht, so kann diese einen, zwei oder drei der oben erwähnten Substituenten in beliebiger Position aufweisen. Vorzugsweise sind diese Substituenten unabhängig voneinander ausgewählt unter Alkyl, Difluormethyl, Trifluormethyl und Halogen, insbesondere Chlor, Brom und Jod. Besonders bevorzugt weist die Phenylgruppe einen Substituenten in 2-Position auf.

Wenn A für einen 5-gliedrigen Heterocyclus steht, handelt es sich insbesondere um einen Furyl-, Thiazolyl-, Pyrazolyl-, Imidazolyl-, Oxazolyl-, Thienyl-, Triazolyl- oder Thiadiazolylrest oder um die entsprechenden Dihydro- oder Tetrahydroderivate davon. Ein Thiazolyl- oder Pyrazolylrest ist bevorzugt.

Wenn A für einen 6-gliedrigen Heterocyclus steht, handelt es sich dabei insbesondere um einen Pyridylrest oder einen Rest der Formel:

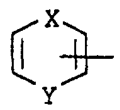

worin einer der Reste X und Y für O, S oder $NR^{23}$ steht, wobei $R^{23}$ für H oder Alkyl steht und der andere der Reste X und Y für $CH_2$, S, SO, $SO_2$ oder $NR^{23}$ steht.

Besonders bevorzugt handelt es sich bei dem 6-gliedrigen aromatischen Heterocyclus um einen Pyridylrest, insbesondere einen 3-Pyridylrest, oder um einen Rest der Formel

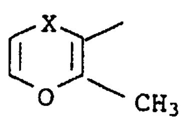

(A3)

worin X für $CH_2$, S, SO oder $SO_2$ steht.

Die erwähnten heterocyclischen Reste können gegebenenfalls 1, 2 oder 3 der oben genannten Substituenten aufweisen, wobei diese Substituenten vorzugsweise unabhängig voneinander ausgewählt sind unter Alkyl, Halogen, Difluormethyl oder Trifluormethyl.

Besonders bevorzugt steht A für einen Rest der Formeln:

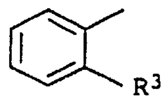

(A1)

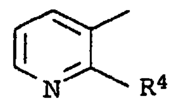

(A2)

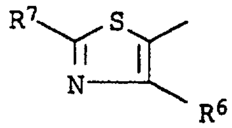

(A5)

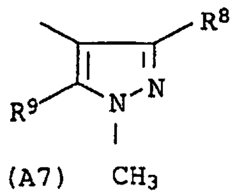

(A7)

worin $R^3$, $R^4$, $R^6$, $R^7$, $R^8$ und $R^9$ unabhängig voneinander für Wasserstoff, Alkyl, insbesondere Methyl, Halogen, insbesondere Chlor, $CHF_2$ oder $CF_3$ stehen.

Der Rest $R^1$ in der Formel I steht vorzugsweise für ein Wasserstoffatom.

Der Rest $R^2$ in der Formel I steht vorzugsweise für einen Phenylrest. Vorzugsweise weist $R^2$ mindestens einen Substituenten auf, der insbesondere bevorzugt in 2-Stellung vorhanden ist. Vorzugsweise ist der Substituent (oder sind die Substituenten) ausgewählt unter Alkyl, Cycloalkyl, Cycloalkenyl, Halogen oder Phenyl.

Die Substituenten des Restes $R^2$ können ihrerseits wieder substituiert sein. Die aliphatischen oder cycloaliphatischen Substituenten können dabei partiell oder vollständig halogeniert, insbesondere fluoriert oder chloriert, sein. Vorzugsweise weisen sie 1, 2 oder 3 Fluor- oder Chloratome auf. Wenn der Substituent des Restes $R^2$ eine Phenylgruppe ist, so kann diese vorzugsweise mit 1 bis 3 Halogenatomen, insbesondere Chloratomen, und/oder mit einem Rest substituiert sein, der vorzugsweise ausgewählt ist unter Alkyl und Alkoxy. Besonders bevorzugt ist die Phenylgruppe mit einem Halogenatom in p-Position substituiert, d.h. der besonders bevorzugte Substituent des Restes $R^2$ ist ein p-halogensubstituierter Phenylrest. Der Rest $R^2$ kann auch mit einem gesättigten 5-gliedrigen Ring kondensiert sein, wobei dieser Ring seinerseits 1 bis 3 Alkylsubstituenten aufweisen kann.

$R^2$ steht dann beispielsweise für Indanyl, Thiaindanyl und Oxaindanyl. Bevorzugt sind Indanyl und 2-Oxaindanyl, die insbesondere über die 4-Stellung an das Stickstoffatom gebunden sind.

Gemäß einer bevorzugten Ausführungsform enthält das erfindungsgemäße Mittel als Amidverbindung eine Verbindung der Formel I, worin A die folgenden Bedeutungen besitzt:

Phenyl, Pyridyl, Dihydropyranyl, Dihydrooxathiinyl, Dihydrooxathiinyloxid, Dihydrooxathiinyldioxid, Furyl, Thiazolyl, Pyrazolyl oder Oxazolyl, wobei diese Gruppen 1, 2 oder 3 Substituenten aufweisen können, die unabhängig voneinander ausgewählt sind unter Alkyl, Halogen, Difluormethyl und Trifluormethyl.

Gemäß einer weiteren bevorzugten Ausführungsform steht A für:

Pyridin-3-yl, das gegebenenfalls in 2-Stellung durch Halogen, Methyl, Difluormethyl, Trifluormethyl, Methoxy, Methylthio, Methylsulfinyl oder Methylsulfonyl substituiert ist;

Phenyl, das gegebenenfalls in 2-Stellung durch Methyl, Trifluormethyl, Chlor, Brom oder Iod substituiert ist;

2-Methyl-5,6-dihydropyran-3-yl;

2-Methyl-5,6-dihydro-1,4-oxathiin-3-yl oder das 4-Oxid oder 4,4-Dioxid davon;

2-Methyl-furan-3-yl, das gegebenenfalls in 4- und/oder 5-Stellung durch Methyl substituiert ist;

Thiazol-5-yl, das gegebenenfalls in 2- und/oder 4-Stellung durch Methyl, Chlor, Difluormethyl oder Trifluormethyl substituiert ist;

Thiazol-4-yl, das gegebenenfalls in 2- und/oder 5-Stellung durch Methyl, Chlor, Difluormethyl oder Trifluormethyl substituiert ist;

1-Methylpyrazol-4-yl, das gegebenenfalls in 3- und/oder 5-Stellung durch Methyl, Chlor, Difluormethyl oder Trifluormethyl substituiert ist; oder

Oxazol-5-yl, das gegebenenfalls in 2- und/oder 4-Stellung durch Methyl oder Chlor substituiert ist.

Gemäß einer weiteren bevorzugten Ausführungsform enthalten die erfindungsgemäßen Mittel als Amidverbindung eine Verbindung der Formel I, worin $R^2$ für eine Phenylgruppe steht, die gegebenenfalls substituiert ist durch 1, 2 oder 3 der oben genannten Substituenten.

Gemäß einer weiteren bevorzugten Ausführungsform enthalten die erfindungsgemäßen Mittel als Amidverbindung eine Verbindung der Formel I, worin $R^2$ für eine Phenylgruppe steht, die in 2-Stellung einen der folgenden Substituenten aufweist:

$C_3$-$C_6$-Alkyl, $C_5$-$C_6$-Cycloalkenyl, $C_5$-$C_6$-Cycloalkyloxy, Cycloalkenyloxy, wobei diese Gruppen durch 1, 2 oder 3 $C_1$-$C_4$-Alkylgruppen substituiert sein können,

Phenyl, das durch 1 bis 5 Halogenatome und/oder 1 bis 3 Gruppen, die unabhängig voneinander ausgewählt sind unter $C_1$-$C_4$-Alkyl, $C_1$-$C_4$-Halogenalkyl, $C_1$-$C_4$-Alkoxy, $C_1$-$C_4$-Halogenalkoxy, $C_1$-$C_4$-Alkylthio und $C_1$-$C_4$-Halogenalkylthio, substituiert ist,

Indanyl oder Oxaindanyl, das gegebenenfalls durch 1, 2 oder 3 $C_1$-$C_4$-Alkylgruppen substituiert ist.

Gemäß einer weiteren bevorzugten Ausführungsform enthalten die erfindungsgemäßen Mittel als Amidverbindung eine Verbindung der Formel Ia,

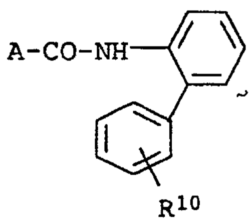

(Ia)

worin

A für

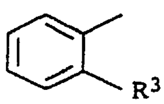

(A1)

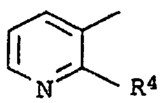

(A2)

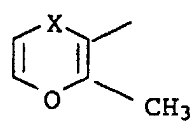

(A3)

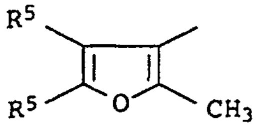

(A4)

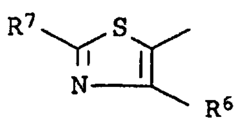

(A5)

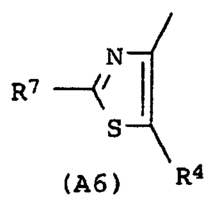

(A6)

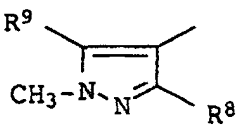
(A7)

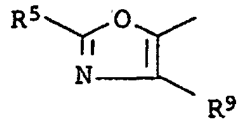
(A8)

steht;

- X für Methylen, Schwefel, Sulfinyl oder Sulfonyl ($SO_2$) steht,
- $R^3$ für Methyl, Difluormethyl, Trifluormethyl, Chlor, Brom oder Jod steht,
- $R^4$ für Trifluormethyl oder Chlor steht,
- $R^5$ für Wasserstoff oder Methyl steht,
- $R^6$ für Methyl, Difluormethyl, Trifluormethyl oder Chlor steht,
- $R^7$ für Wasserstoff, Methyl oder Chlor steht,
- $R^8$ für Methyl, Difluormethyl oder Trifluormethyl steht,
- $R^9$ für Wasserstoff, Methyl, Difluormethyl, Trifluormethyl oder Chlor steht,
- $R^{10}$ für $C_1$-$C_4$-Alkyl, $C_1$-$C_4$-Alkoxy, $C_1$-$C_4$-Alkylthio oder Halogen steht.

Gemäß einer besonders bevorzugten Ausführungsform enthalten die Mittel als Amidverbindung eine Verbindung der Formel Ib

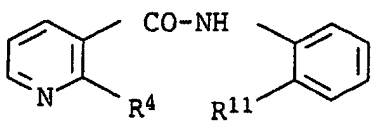
(Ib)

worin

- $R^4$ für Halogen steht und
- $R^{11}$ für Phenyl steht, das durch Halogen substituiert ist.

Brauchbare Amidverbindungen der Formel I sind in der EP-A-545 099 und 589 301, auf die hiermit in vollem Umfang Bezug genommen wird, genannt.

Die Herstellung der Amidverbindungen der Formel I ist beispielsweise aus der EP-A-545 099 oder 589 301 bekannt oder kann nach analogen Verfahren erfolgen.

Besonders bevorzugte Amidverbindungen der Formel I sind:

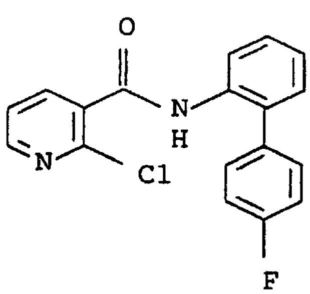

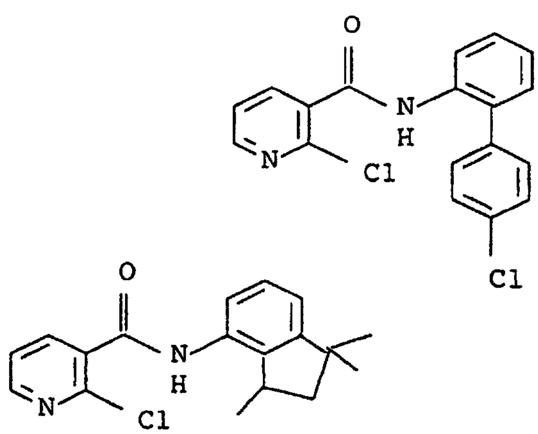

Unter den Verbindungen der Formel III sind solche bevorzugt, bei denen $X^1$ eine $C_1$-$C_4$-Halogenalkyl, insbesondere eine Trifluormethylgruppe und $X^2$ und $X^3$ ein Wasserstoffatom oder eine Halogengruppe, insbesondere ein Wasserstoffatom darstellen. $X^4$ und $X^5$ sind bevorzugt Wasserstoff, Halogen (insbesondere Cl oder F), $C_1$-$C_4$-Alkoxy (insbesondere Methoxy oder Ethoxy), $C_1$-$C_4$-Alkylthio (insbesondere Methylthio oder Ethylthio), $C_1$-$C_4$-Halogenalkyl (insbesondere Trifluormethyl) oder $C_1$-$C_4$-Halogenalkoxy (insbesondere Trifluormethoxy).

Als Substituenten $R^{19}$ werden $C_1$-$C_4$-Alkyl (Methyl, Ethyl, n- und i-Propyl und t-Butyl), $C_1$-$C_4$-Alkylen-$C_3$-$C_7$-Cycloalkyl, $C_1$-$C_4$-Alkenyl (insbesondere Ethenyl, Propenyl und Butenyl, die insbesondere mit Halogen (vorzugsweise Cl) substituiert sein können), Propinyl, Cyanomethyl und Methoxymethyl bevorzugt. Unter den $C_1$-$C_4$-Alkylen-$C_3$-$C_7$-Cycloalkylsubstituenten sind insbesondere methylensubstituierte Verbindungen, insbesondere Methylencyclopropyl, Methylencyclopentyl, Methylencyclohexyl und Methylencyclohexenyl bevorzugt. Die Ringe in diesen Substituenten können vorzugsweise mit Halogen substituiert sein.

Als Substituenten $R^{20}$ sind neben Phenyl (ggf. substituiert) insbesondere Thienyl, Pyrazolyl, Pyrrolyl, Imidazolyl, Thiazolyl, Furyl, Pyridazinyl und Pyrimidinyl zu nennen. Bevorzugte Substituenten an diesen Ringsystemen sind Halogen (insbesondere F und Cl), $C_1$-$C_4$-Alkoxy (insbesondere Methoxy) und $C_1$-$C_4$-Alkyl (insbesondere Methyl, Ethyl). Die Zahl der Ringsubstituenten kann 1 bis 3, insbesondere 1 bis 2 betragen. Phenyl oder substituiertes Phenyl wird besonders bevorzugt.

Bevorzugte Substituenten $R^{21}$ und $R^{22}$ sind Wasserstoff, F, Cl, Methyl, Ethyl, Methoxy, Thiomethyl und N-Methylamino. $R^3$ und $R^4$ können auch zusammen eine Gruppierung =O bilden.

Bevorzugte Verbindungen der Formel III sind den Tabellen der bereits erwähnten WO 96/019442 zu entnehmen. Von diesen wiederum sind insbesondere die in der nachfolgenden Tabelle 3 aufgeführten Verbindungen besonders bevorzugt ($R^{21}$ und $R^{22}$ sind jeweils Wasserstoff) .

Tabelle 3:

| Nr. | $X^1$ | $X^2$ | $X^3$ | $X^4$ | $X^5$ | $R^{19}$ | $R^{20}$ |
|---|---|---|---|---|---|---|---|
| III.1 | $CF_3$ | H | H | H | H | Ethyl | Ph-4-OMe |
| III.2 | $CF_3$ | H | H | H | H | Methyl | Ph-4-OMe |
| III.3 | $CF_3$ | H | H | H | H | $-CH_2$-cPr | 2-Thienyl |
| III.4 | $CF_3$ | H | H | H | H | $-CH_2$-cPr | 3-Thienyl |
| III.5 | $CF_3$ | H | H | H | H | $-CH_2$-cPr | Ph-2,4-$F_2$ |
| III.6 | $CF_3$ | H | H | H | H | $-CH_2$-cPr | Ph-2-F |
| III.7 | $CF_3$ | H | H | H | H | $-CH_2$-cPr | Ph-2-F-4-OMe |
| III.8 | $CF_3$ | H | H | H | H | $-CH_2$-cPr | Ph-3-Me |
| III.9 | $CF_3$ | H | H | H | H | $-CH_2$-cPr | Ph-3-Me-4-OMe |
| III.10 | $CF_3$ | H | H | H | H | $-CH_2$-cPr | Ph-4-F |
| III.11 | $CF_3$ | H | H | H | H | $-CH_2$-cPr | Ph-4-Me |
| III.12 | $CF_3$ | H | H | H | H | $-CH_2$-cPr | Ph-4-OMe |
| III.13 | $CF_3$ | H | H | H | H | $-CH_2$-cPr | Ph |
| III.14 | $CF_3$ | H | H | H | H | $-CH_2-CH=CH_2$ | Ph |
| III.15 | $CF_3$ | H | H | H | H | $-CH_2-CH=CH_2$ | Ph-4-OMe |
| III.16 | $CF_3$ | H | H | H | H | $-CH_2-CH=CCl_2$ | Ph-4-OMe |
| III.17 | $CF_3$ | H | H | H | F | $-CH_2-CH_3$ | Ph-4-OMe |
| III.18 | $CF_3$ | H | H | H | F | $-CH_2CH_3$ | Ph |
| III.19 | $CF_3$ | H | H | H | F | $-CH_3$ | Ph-4-OMe |
| III.20 | $CF_3$ | H | H | H | F | $-CH_2$-cPr | Ph |
| III.21 | $CF_3$ | H | H | H | F | $-CH_2$-cPr | Ph-2-F |
| III.22 | $CF_3$ | H | H | H | F | $-CH_2$-cPr | Ph-2,4-F $_2$ |
| III.23 | $CF_3$ | H | H | H | F | $-CH_2$-cPr | Ph-2-F-3-Me |

Tabelle 3: (fortgesetzt)

| Nr. | $X^1$ | $X^2$ | $X^3$ | $X^4$ | $X^5$ | $R^{19}$ | $R^{20}$ |
|---|---|---|---|---|---|---|---|
| III.24 | $CF_3$ | H | H | H | F | $-CH_2$-cPr | Ph-2-F-4-OMe |
| III.25 | $CF_3$ | H | H | H | F | $-CH_2$-cPr | Ph-3,5-$Me_2$ |
| III.26 | $CF_3$ | H | H | H | F | $-CH_2$-cPr | 3-Methyl-pyrazol-1-yl |
| III.27 | $CF_3$ | H | H | H | F | $-CH_2$-cPr | 3-Methyl-2-thienyl |
| III.28 | $CF_3$ | H | H | H | F | $-CH_2$-cPr | 2-Thienyl |
| III.29 | $CF_3$ | H | H | H | F | $-CH_2$-cPr | 3-Thienyl |
| III.30 | $CF_3$ | H | H | H | F | $-CH_2-CHF_2$ | Ph-4-OMe |
| III.31 | $CF_3$ | H | H | H | F | $-CH_2-OCH_3$ | Ph-4-OMe |
| III.32 | $CF_3$ | H | H | H | F | $-CH_2-OCH_3$ | Ph |
| III.33 | $CF_3$ | H | H | H | F | $-CH_2CN$ | Ph-4-Ome |
| III.34 | $CF_3$ | H | H | H | F | $-CH_2CN$ | Ph |
| III.35 | $CF_3$ | H | H | H | F | $-CH_2-C\equiv CH$ | Ph |
| III.36 | $CF_3$ | H | H | H | F | $-CH_2-C\equiv CH$ | Ph-4-OMe |
| III.37 | $CF_3$ | H | H | H | F | $-CH_2-C\equiv CH$ | Ph-2-F |
| III.38 | $CF_3$ | H | H | H | F | $-CH_2-C\equiv CH$ | Ph-4-Me |
| III.39 | $CF_3$ | H | H | H | F | $-CH_2-C\equiv CH$ | 2-Thienyl |
| III.40 | $CF_3$ | H | H | H | F | $-CH_2-C\equiv CH$ | Ph-2-F-4-OMe |
| III.41 | $CF_3$ | H | H | H | F | i-Propyl | Ph |
| III.42 | $CF_3$ | H | H | H | F | n-Butyl | Ph |
| III.43 | $CF_3$ | H | H | H | F | n-Propyl | Ph |
| III.44 | $CF_3$ | H | H | H | F | t-Butyl | Ph |
| III.45 | $CF_3$ | H | H | H | Cl | $-CH_3$ | |
| III.46 | $CF_3$ | H | H | H | Cl | $-CH_2CN$ | Ph-4-OMe |
| III.47 | $CF_3$ | H | H | H | Cl | $-CH_2$-OMe | Ph-4-OMe |
| III.48 | $CF_3$ | H | H | H | Cl | $-CH_2$-cPr | Ph |
| III.49 | $CF_3$ | H | H | H | Cl | $-CH_2$-cPr | 3-Methyl-pyrazol-1-yl |
| III.50 | $CF_3$ | H | H | H | Cl | $-CH_2$-cPr | 2-Thienyl |
| III.51 | $CF_3$ | H | H | H | Cl | $-CH_2$-cPr | Ph-2,4-$F_2$ |
| III.52 | $CF_3$ | H | H | H | Cl | $-CH_2-C\equiv CH$ | Ph-4-OMe |
| III.53 | $CF_3$ | H | H | H | $CF_3$ | $-CH_3$ | Ph-4-OMe |
| III.54 | $CF_3$ | H | H | H | $CF_3$ | $-CH_2CH_2Cl$ | Ph-4-OMe |
| III.55 | $CF_3$ | H | H | H | $CF_3$ | $-CH_2$-cPr | 2-Thienyl |
| III.56 | $CF_3$ | H | H | H | $CF_3$ | $-CH_2$-cPr | Ph-2-F-5-Me |
| III.57 | $CF_3$ | H | H | H | $CF_3$ | $-CH_2$-cPr | Ph-4-OMe |
| III.58 | $CF_3$ | H | H | H | $CF_3$ | $-CH_2$-cPr | Ph |
| III.59 | $CF_3$ | H | H | H | $OCH_3$ | $-CH_2CH_3$ | Ph-4-OMe |
| III.60 | $CF_3$ | H | H | H | $OCH_3$ | $-CH_2$-cPr | Ph-4-OMe |
| III.61 | $CF_3$ | H | H | H | $OCH_3$ | $-CH_2$-cPr | Ph |

Tabelle 3: (fortgesetzt)

| Nr. | $X^1$ | $X^2$ | $X^3$ | $X^4$ | $X^5$ | $R^{19}$ | $R^{20}$ |
|---|---|---|---|---|---|---|---|
| III.62 | $CF_3$ | H | H | H | $SCH_3$ | $-CH_2$-cPr | Ph |
| III.63 | $CF_3$ | H | H | H | $SCH_3$ | $-CH_2$-cPr | Ph-4-Ome |
| III.64 | $CF_3$ | H | H | Cl | F | $-CH_2-CH_2Cl$ | Ph |
| III.65 | $CF_3$ | H | H | Cl | F | $-CH_2-CH=CH_2$ | Ph-4-OMe |
| III.66 | $CF_3$ | H | H | Cl | F | $-CH_2$-cPr | 2-Thienyl |
| III.67 | $CF_3$ | H | H | Cl | F | $-CH_2$-cPr | Ph-2-F |
| III.68 | $CF_3$ | H | H | Cl | F | $-CH_2$-cPr | Ph |
| III.69 | $CF_3$ | H | H | Cl | F | $-CH_2$-cPr | Ph-2-F-5-Me |
| III.70 | $CF_3$ | H | H | Cl | Cl | $-CH_2-CH=CH_2$ | Ph-4-OMe |
| III.71 | $CF_3$ | H | H | Cl | Cl | $-CH_2CH_2Cl$ | Ph |
| III.72 | $CF_3$ | H | H | Cl | Cl | $-CH_2CH_3$ | Ph-2-F-5-Me |
| III.73 | $CF_3$ | H | H | Cl | Cl | $-CH_2$-cPr | Ph-3,5-$Me_2$ |
| III.74 | $CF_3$ | H | H | $SCH_3$ | F | $-CH_2$-cPr | Ph-4-OMe |
| III.75 | $CF_3$ | H | H | $OCH_3$ | F | $-CH_2$-cPr | Ph-4-OMe |
| III.76 | $CF_3$ | H | F | H | H | $-CH_2$-cPr | Ph |
| III.77 | $CF_3$ | H | F | H | H | $-CH_2-CH_3$ | Ph-4-OMe |
| III.78 | $CF_3$ | H | H | F | F | $-CH_2CH_3$ | Ph |
| III.79 | $CF_3$ | H | H | F | F | $-CH_2-CH_2Cl$ | Ph-2-F-5-Me |
| III.80 | $CF_3$ | H | H | F | F | $-CH_2-OCH_3$ | Ph-4-OMe |
| III.81 | $CF_3$ | H | H | F | F | $-CH_2$-cPr | Ph |
| III.82 | $CF_3$ | H | H | F | F | $-CH_2$-cPr | 3-Methyl-pyrazol-1-yl |
| III.83 | $CF_3$ | H | H | F | F | $-CH_2$-cPr | 3-Methyl-2-thienyl |
| III.84 | $CF_3$ | H | H | F | F | $-CH_2$-cPr | Ph-2-F-3-Me |
| III.85 | $CF_3$ | H | H | F | F | $-CH_2$-cPr | Ph-2-F-4-OMe |
| III.86 | $CF_3$ | H | H | F | F | $-CH_2$-cPr | Ph-2-F-5-Me |
| III.87 | $CF_3$ | H | H | F | F | $-CH_2$-cPr | Ph-4-OMe |
| III.88 | $CF_3$ | H | H | F | F | $-CH_2$-cPr | Ph-4F |
| III.89 | $CF_3$ | H | H | F | F | i-Propyl | Ph-4-OMe |
| III.90 | $CF_3$ | H | H | F | F | n-Butyl | Ph-4-OMe |
| III.91 | $CF_3$ | H | H | F | F | $-CH_2-C\equiv CH$ | Ph-4-OMe |
| III.92 | $CF_3$ | H | H | $CF_3$ | F | $-CH_3$ | Ph-4-OMe |
| III.93 | $CF_3$ | H | H | $CF_3$ | F | $-CH_2-CH=CH_2$ | Ph |
| III.94 | $CF_3$ | H | H | $CF_3$ | F | $-CH_2$-cPr | Ph |
| III.95 | $CF_3$ | H | H | Cl | Cl | $-CH_2$-CHxe-3 | Ph |
| III.96 | $CF_3$ | H | H | F | H | $-CH_2$-cPr | Ph-4-F |
| III.97 | $CF_3$ | H | H | Cl | Cl | $-CH_2$-cHex | Ph |
| III.98 | $CF_3$ | H | H | H | F | $-CH_2-SCH_3$ | Ph |
| III.99 | $CF_3$ | H | H | H | F | $-CH_2-SOCH_3$ | Ph |

Tabelle 3: (fortgesetzt)

| Nr. | $X^1$ | $X^2$ | $X^3$ | $X^4$ | $X^5$ | $R^{19}$ | $R^{20}$ |
|---|---|---|---|---|---|---|---|
| III.100 | $CF_3$ | H | H | H | F | $-CH_2-SO_2CH_3$ | Ph |
| III.101 | $CF_3$ | H | H | H | F | $-CH_2-NHMe$ | Ph |
| III.102 | $CF_3$ | H | H | H | F | $CH_2-CONH_2$ | Ph |
| III.103 | $CF_3$ | H | H | H | F | $CH_2CON(CH_3)_2$ | Ph |

In der vorstehenden Tabelle steht cPr für Cyclopropyl, cHxe-n für in Position n ungesättigtes Cyclohexenyl, c-Hex für Cyclohexyl und Ph für Phenyl.

Besonders bevorzugt werden Verbindungen III, in denen $R^{19}$ für einen Rest $CH_2$-cPr und $R^{20}$ für einen ggf. substituierten Phenylrest steht. Von diesen wiederum bevorzugt sind die Verbindungen, in denen $X^4$ und X5 Halogen, vorzugsweise F, bedeuten. Die physikalischen Daten dieser Verbindungen sowie Verfahren zu deren Herstellung sind der bereits erwähnten WO 96/19442 zu entnehmen.

Um die synergistische Wirkung zu entfalten, genügt bereits ein geringer Anteil an Amidverbindung der Formel I. Vorzugsweise werden Amidverbindung und Wirkstoff der Formel III in einem Gewichtsverhältnis im Bereich von 50: 1 bis 1:50, insbesondere 10:1 bis 1:10 eingesetzt.

Beispiele für anorganische Säuren sind Halogenwasserstoffsäuren wie Fluorwasserstoff, Chlorwasserstoff, Bromwasserstoff und Jodwasserstoff, Schwefelsäure, Phosphorsäure und Salpetersäure.

Als organischen Säuren kommen beispielsweise Ameisensäure, Kohlensäure und Alkansäuren wie Essigsäure, Trifluoressigsäure, Trichloressigsäure und Propionsäure sowie Glycolsäure, Thiocyansäure, Milchsäure, Bernsteinsäure, Zitronensäure, Benzoesäure, Zimtsäure, Oxalsäure, Alkylsulfonsäuren (Sulfonsäuren mit geradkettigen oder verzweigten Alkylresten mit 1 bis 20 Kohlenstoffatomen), Arylsulfonsäuren oder -disulfonsäuren (aromatische Reste wie Phenyl und Naphthyl welche eine oder zwei Sulfonsäuregruppen tragen), Alkylphosphonsäuren (Phosphonsäuren mit geradkettigen oder verzweigten Alkylresten mit 1 bis 20 Kohlenstoffatomen), Arylphosphonsäuren oder -diphosphonsäuren (aromatische Reste wie Phenyl und Naphthyl welche eine oder zwei Phosphorsäurereste tragen), wobei die Alkyl- bzw. Arylreste weitere Substituenten tragen können, z.B. p-Toluolsulfonsäure, Salizylsäure, p-Aminosalizylsäure, 2-Phenoxybenzoesäure, 2-Acetoxybenzoesäure etc.

Als Metallionen kommen insbesondere die Ionen der Elemente der ersten bis achten Nebengruppe, vor allem Chrom, Mangan, Eisen, Kobalt, Nickel, Kupfer, Zink und daneben der zweiten Hauptgruppe, vor allem Calcium und Magnesium, der dritten und vierten Hauptgruppe, insbesondere Aluminium, Zinn und Blei in Betracht. Die Metalle können dabei gegebenenfalls in verschiedenen ihnen zukommenden Wertigkeiten vorliegen.

Bevorzugt setzt man bei der Bereitstellung der Mischungen die reinen Wirkstoffe I und III ein, denen man weitere Wirkstoffe gegen Schadpilze oder gegen andere Schädlinge wie Insekten, Spinntiere oder Nematoden oder auch herbizide oder wachstumsregulierende Wirkstoffe oder Düngemittel beimischen kann.

Die Mischungen aus den Verbindungen I und III bzw. die Verbindungen I und III gleichzeitig, gemeinsam oder getrennt angewandt, zeichnen sich durch eine hervorragende Wirkung gegen ein breites Spektrum von pflanzenpathogenen Pilzen, insbesondere aus der Klasse der Ascomyceten, Basidiomyceten, Phycomyceten und Deuteromyceten aus. Sie sind z.T. systemisch wirksam und können daher auch als Blatt- und Bodenfungizide eingesetzt werden.

Besondere Bedeutung haben sie für die Bekämpfung einer Vielzahl von Pilzen an verschiedenen Kulturpflanzen wie Baumwolle, Gemüsepflanzen (z.B. Gurken, Bohnen, Tomaten, Kartoffeln und Kürbisgewächse), Gerste, Gras, Hafer, Bananen, Kaffee, Mais, Obstpflanzen, Reis, Roggen, Soja, Wein, Weizen, Zierpflanzen, Zuckerrohr sowie an einer Vielzahl von Samen.

Insbesondere eignen sie sich zur Bekämpfung der folgenden pflanzenpathogenen Pilze: Erysiphe graminis (echter Mehltau) an Getreide, Erysiphe cichoracearum und Sphaerotheca fuliginea an Kürbisgewächsen, Podosphaera leucotricha an Äpfeln, Uncinula necator an Reben, Puccinia-Arten an Getreide, Rhizoctonia-Arten an Baumwolle, Reis und Rasen, Ustilago-Arten an Getreide und Zukkerrohr, Venturia inaequalis (Schorf) an Äpfeln, Helminthosporium-Arten an Getreide, Septoria nodorum an Weizen, Botrytis cinera (Grauschimmel) an Erdbeeren, Gemüse, Zierpflanzen und Reben, Cercospora arachidicola an Erdnüssen, Pseudocercosporella herpotrichoides an Weizen und Gerste, Pyricularia oryzae an Reis, Phytophthora infestans an Kartoffeln und Tomaten, Plasmopara viticola an Reben, Pseudoperonospora-Arten in Hopfen und Gurken, Alternaria-Arten an Gemüse und Obst, Mycosphaerella-Arten in Bananen sowie Fusarium- und Verticillium-Arten.

Besonders bevorzugt sind die erfindungsgemäßen Mischungen zur Bekämpfung von echten Mehltaupilzen in Reben- und Gemüsekulturen sowie in Zierpflanzen und Getreide einsetzbar.

Die Verbindungen I und III können gleichzeitig, und zwar gemeinsam oder getrennt, oder nacheinander aufgebracht werden, wobei die Reihenfolge bei getrennter Applikation im allgemeinen keine Auswirkung auf den Bekämpfungserfolg hat.

Die Aufwandmengen der erfindungsgemäßen Mischungen liegen, vor allem bei landwirtschaftlichen Kulturflächen, je nach Art des gewünschten Effekts bei 0,01 bis 8 kg/ha, vorzugsweise 0,1 bis 5 kg/ha, insbesondere 0,5 bis 3,0 kg/ha.

Die Aufwandmengen liegen dabei für die Verbindungen I bei 0,01 bis 2,5 kg/ha, vorzugsweise 0,05 bis 2,5 kg/ha, insbesondere 0,1 bis 1,0 kg/ha.

Die Aufwandmengen für die Verbindungen III liegen entsprechend bei 0,001 bis 5 kg/ha, vorzugsweise 0,005 bis 2 kg/ha, insbesondere 0,01 bis 1,0 kg/ha.

Bei der Saatgutbehandlung werden im allgemeinen Aufwandmengen an Mischung von 0,001 bis 250 g/kg Saatgut, vorzugsweise 0,01 bis 100 g/kg, insbesondere 0,01 bis 50 g/kg verwendet.

Sofern für Pflanzen pathogene Schadpilze zu bekämpfen sind, erfolgt die getrennte oder gemeinsame Applikation der Verbindungen I und III oder der Mischungen aus den Verbindungen I und III durch Besprühen oder Bestäuben der Samen, der Pflanzen oder der Böden vor oder nach der Aussaat der Pflanzen oder vor oder nach dem Auflaufen der Pflanzen.

Die erfindungsgemäßen fungiziden synergistischen Mischungen bzw. die Verbindungen I und III können beispielsweise in Form von direkt versprühbaren Lösungen, Pulver und Suspensionen oder in Form von hochprozentigen wäßrigen, öligen oder sonstigen Suspensionen, Dispersionen, Emulsionen, Öldispersionen, Pasten, Stäubemitteln, Streumitteln oder Granulaten aufbereitet und durch Versprühen, Vernebeln, Verstäuben, Verstreuen oder Gießen angewendet werden. Die Anwendungsform ist abhängig vom Verwendungszweck; sie soll in jedem Fall eine möglichst feine und gleichmäßige Verteilung der erfindungsgemäßen Mischung gewährleisten.

Die Formulierungen werden in bekannter Weise hergestellt, z.B. durch Verstrecken des Wirkstoffs mit Lösungsmitteln und/oder Trägerstoffen, gewünschtenfalls unter Verwendung von Emulgiermitteln und Dispergiermitteln, wobei im Falle von Wasser als verdünnungsmittel auch andere organische Lösungsmittel als Hilfslösungsmittel verwendet werden können. Als Hilfsstoffe kommen dafür im wesentlichen in Betracht: Lösungsmittel wie Aromaten (z.B. Xylol), chlorierte Aromaten (z.B. Chlorbenzole), Paraffine (z.B. Erdölfraktionen), Alkohole (z.B. Methanol, Butanol), Ketone (z.B. Cyclohexanon), Amine (z.B. Ethanolamin, Dimethylformamid) und Wasser; Trägerstoffe wie natürliche Gesteinsmehle (z.B. Kaoline, Tonerden, Talkum, Kreide) und synthetische Gesteinsmehle (z.B. hochdisperse Kieselsäure, Silikate); Emulgiermittel wie nichtionogene und anionische Emulgatoren (z.B. Polyoxyethylen-Fettalkohol-Ether, Alkylsulfonate und Arylsulfonate) und Dispergiermittel wie Ligninsulfitablaugen und Methylcellulose.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Lauryletherund Fettalkoholsulfaten, sowie Salze sulfatierter Hexa-, Heptaund Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol- oder Tributylphenylpolyglycolether, Alkylarylpolyetheralkohole, Isotridecylalkohol, Fettalkoholethylenoxid- Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose in Betracht.

Pulver Streu- und Stäubemittel können durch Mischen oder gemeinsames Vermahlen der Verbindungen I oder III oder der Mischung aus den Verbindungen I und III mit einem festen Trägerstoff hergestellt werden.

Granulate (z.B. Umhüllungs-, Imprägnierungs- oder Homogengranulate) werden üblicherweise durch Bindung des Wirkstoffs oder der Wirkstoffe an einen festen Trägerstoff hergestellt.

Als Füllstoffe bzw. feste Trägerstoffe dienen beispielsweise Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Formulierungen enthalten im allgemeinen 0,1 bis 95 Gew.-%, vorzugsweise 0,5 bis 90 Gew.-% einer der Verbindungen I oder III bzw, der Mischung aus den Verbindungen I und III. Die Wirkstoffe werden dabei in einer Reinheit von 90% bis 100%, vorzugsweise 95% bis 100% (nach NMR- oder HPLC-Spektrum) eingesetzt.

Die Anwendung der Verbindungen I und III, der Mischungen oder der entsprechenden Formulierungen erfolgt so, daß man die Schadpilze, deren Lebensraum oder die von ihnen freizuhaltenden Pflanzen, Samen, Böden, Flächen, Materialien oder Räume mit einer fungizid wirksamen Menge der Mischung, bzw. der Verbindungen I und III bei getrennter Ausbringung, behandelt.

Die Anwendung kann vor oder nach dem Befall durch die Schadpilze erfolgen.

Beispiele für solche Zubereitungen, welche die Wirkstoffe enthalten, sind:

I. eine Lösung aus 90 Gew.-Teilen der Wirkstoffe und 10 Gew.-Teilen N-Methylpyrrolidon, die zur Anwendung in

Form kleinster Tropfen geeignet ist;

II. eine Mischung aus 20 Gew.-Teilen der Wirkstoffe, 80 Gew.-Teilen Xylol, 10 Gew.-Teilen des Anlagerungsproduktes von 8 bis 10 Mol Ethylenoxid an 1 Mol Ölsäure-N-monoethanolamid, 5 Gew.-Teilen Calciumsalz der Dodecylbenzolsulfonsäure, 5 Gew.-Teilen des Anlagerungsproduktes von 40 Mol Ethylenoxid an 1 Mol Ricinusöl; durch feines Verteilen der Lösung in Wasser erhält man eine Dispersion;

III. eine wäßrige Dispersion aus 20 Gew.-Teilen der Wirkstoffe, 40 Gew.-Teilen Cyclohexanon, 30 Gew.-Teilen Isobutanol, 20 Gew.-Teilen des Anlagerungsproduktes von 40 Mol Ethylenoxid an 1 Mol Ricinusöl;

IV. eine wäßrige Dispersion aus 20 Gew.-Teilen der Wirkstoffe, 25 Gew.-Teilen Cyclohexanol, 65 Gew.-Teilen einer Mineral-ölfraktion vom Siedepunkt 210 bis 280°C und 10 Gew.-Teilen des Anlagerungsproduktes von 40 Mol Ethylenoxid an 1 Mol Ricinusöl;

V. eine in einer Hammermühle vermahlene Mischung aus 80 Gew.-Teilen der Wirkstoffe, 3 Gew.-Teilen des Natriumsalzes der Diisobutylnaphthalin-1-sulfonsäure, 10 Gew.-Teilen des Natriumsalzes einer Ligninsulfonsäure aus einer Sulfitablauge und 7 Gew.-Teilen pulverförmigem Kieselsäuregel; durch feines Verteilen der Mischung in Wasser erhält man eine Spritzbrühe;

VI. eine innige Mischung aus 3 Gew.-Teilen der Wirkstoffe und 97 Gew.-Teilen feinteiligem Kaolin; dieses Stäubemittel enthält 3 Gew.-% Wirkstoff;

VII. eine innige Mischung aus 30 Gew.-Teilen der Wirkstoffe, 92 Gew.-Teilen pulverförmigem Kieselsäuregel und 8 Gew.-Teilen Paraffinöl, das auf die Oberfläche dieses Kieselsäuregels gesprüht wurde; diese Aufbereitung gibt dem Wirkstoff eine gute Haftfähigkeit;

VIII. eine.stabile wäßrige Dispersion aus 40 Gew.-Teilen der Wirkstoffe, 10 Gew.-Teilen des Natriumsalzes eines Phenolsulfonsäure-Harnstoff-Formaldehyd-Kondensates, 2 Gew.-Teilen Kieselgel und 48 Gew.-Teilen Wasser, die weiter verdünnt werden kann;

IX. eine stabile ölige Dispersion aus 20 Gew.-Teilen der Wirkstoffe, 2 Gew.-Teilen des Calciumsalzes der Dodecylbenzolsulfonsäure, 8 Gew.-Teilen Fettalkohol-polyglykolether, 20 Gew.-Teilen des Natriumsalzes eines Phenolsulfonsäure-Harnstoff-Formaldehydkondensates und 88 Gew.-Teilen eines paraffinischen Mineralöls.

Anwendungsbeispiel

Die synergistische Wirkung der erfindungsgemäßen Mischungen läßt sich durch die folgenden Versuche zeigen:

Die Wirkstoffe werden getrennt oder gemeinsam als 10%ige Emulsion in einem Gemisch aus 63 Gew.-% Cyclohexanon und 27 Gew.-% Emulgator aufbereitet und entsprechend der gewünschten Konzentration mit Wasser verdünnt.

Die Auswertung erfolgt durch Feststellung der befallenen Blattflächen in Prozent. Diese Prozent-Werte werden in Wirkungsgrade umgerechnet. Der Wirkungsgrad (**W**) wird nach der Formel von Abbot wie folgt bestimmt:

$$W = (1 - \alpha)\cdot 100/\beta$$

$\alpha$ entspricht dem Pilzbefall der behandelten Pflanzen in % und

$\beta$ entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 wiesen die behandelten Pflanzen keinen Befall auf.

Die zu erwartenden Wirkungsgrade der Wirkstoffmischungen wurden nach der Colby Formel [R.S. Colby, Weeds 15, 20-22 (1967)] ermittelt und mit den beobachteten Wirkungsgraden verglichen.

$$\text{Colby Formel: } E = x + y - x\cdot y/100$$

E zu erwartender Wirkungsgrad, ausgedrückt in % der unbehandelten Kontrolle, beim Einsatz der Mischung aus den Wirkstoffen A und B in den Konzentrationen a und b

x der Wirkungsgrad, ausgedrückt in % der unbehandelten Kontrolle, beim Einsatz des Wirkstoffs A in der Konzentration a

y der Wirkungsgrad, ausgedrückt in % der unbehandelten Kontrolle, beim Einsatz des Wirkstoffs B in der Konzentration b

Wirksamkeit gegen Weizenmehltau

Blätter von in Töpfen gewachsenen Weizenkeimlingen der Sorte "Frühgold" wurden mit wäßriger Wirkstoffaufbereitung, die aus einer Stammlösung bestehend aus 10 % Wirkstoff, 63 % Cyclohexanon und 27 % Emulgiermittel angesetzt wurde, bis zur Tropfnässe besprüht und 24 Stunden nach dem Antrocknen des Spritzbelages mit Sporen des Weizenmehltaus (Erysiphe graminis forma specialis tritici) bestäubt. Die Versuchspflanzen wurden anschließend im Gewächshaus bei Temperaturen zwischen 20 und 24°C und 60 bis 90 % relativer Luftfeuchtigkeit aufgestellt. Nach 7 Tagen wurde das Ausmaß der Mehltauentwicklung visuell in % Befall der gesamten Blattfläche ermittelt.

Als Verbindungen der Formel I wurden folgende Komponenten eingesetzt:

I.1

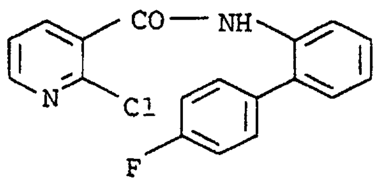

I.2

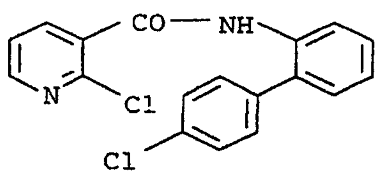

Die Ergebnisse sind den nachfolgenden Tabelle 4 und 5 zu entnehmen.

Tabelle 4

| Bsp. | Wirkstoff | wirkstoffkonzentration in der Spritzbrühe in ppm | Wirkungsgrad in % der unbehandelten Kontrolle |
|---|---|---|---|
| 1V | Kontrolle (unbehandelt) | 0 (98 % Befall) | 0 |
| | I.1 | 63<br>16 | 0 |
| | I.2 | 63<br>16 | 0 |
| 4V**) | Verbindung II.78 aus Tabelle 2 | 1<br>0,25 | 0 |
| 5V | Verbindung III.17 aus Tabelle 3 | 0,25 | 85 |

Tabelle 5

| Bsp. | erfindungsgemäße Mischungen (Gehalt in ppm) | beobachteter Wirkungsgrad | berechneter Wirkungsgrad*) |
|---|---|---|---|
| 6**) | 63 ppm I.1<br>+<br>1 ppm II.78 | 29 | 0 |

*) berechnet nach der Colby-Formel

*) die Versuche 4V, 6, 7 und 8 sind nicht Gegenstand der vorliegenden Teilanmeldung

Tabelle 5 (fortgesetzt)

| Bsp. | erfindungsgemäße Mischungen (Gehalt in ppm) | beobachteter Wirkungsgrad | berechneter Wirkungsgrad*) |
|---|---|---|---|
| 7**) | 63 ppm I.2 + 1 ppm II.78 | 59 | 0 |
| 8**) | 16 ppm 1.2 + 0,25 ppm II.78 | 19 | 0 |
| 9 | 16 ppm I.1 + 0,25 ppm III.17 | 97 | 85 |
| 10 | 16 ppm I.2 + 0,25 ppm III.17 | 100 | 85 |

*) berechnet nach der Colby-Formel
*) die Versuche 4V, 6, 7 und 8 sind nicht Gegenstand der vorliegenden Teilanmeldung

Aus den Ergebnissen des Versuches geht hervor, daß der beobachtete Wirkungsgrad höher ist, als nach der Colby-Formel vorausberechnete Wirkungsgrad.

**Patentansprüche**

**1.** Fungizide Mischungen, enthaltend als aktive Komponenten

a) eine Amidverbindung der Formel I

$$A\text{-}CO\text{-}NR^1R^2 \qquad I$$

worin

A für eine Arylgruppe oder einen aromatischen oder nicht-aromatischen, 5- oder 6-gliedrigen Heterocyclus, der 1 bis 3 Heteroatome aufweist, die ausgewählt sind unter O, N und S, steht;

wobei die Arylgruppe oder der Heterocyclus gegebenenfalls 1, 2 oder 3 Substituenten aufweisen kann, die unabhängig voneinander ausgewählt sind unter Alkyl, Halogen, $CHF_2$, $CF_3$, Alkoxy, Halogenalkoxy, Alkylthio, Alkylsulfinyl und Alkylsulfonyl;

$R^1$ für ein Wasserstoffatom steht;
$R^2$ für eine Phenyl- oder Cycloalkylgruppe steht, die gegebenenfalls 1, 2 oder 3 Substituenten aufweist, die unabhängig voneinander ausgewählt sind unter Alkyl, Alkenyl, Alkinyl, Alkoxy, Alkenyloxy, Alkinyloxy, Cycloalkyl, Cycloalkenyl, Cycloalkyloxy, Cycloalkenyloxy, Phenyl und Halogen, wobei die aliphatischen und cycloaliphatischen Reste partiell oder vollständig halogeniert sein können und/oder die cycloaliphatischen Reste durch 1 bis 3 Alkylgruppen substituiert sein können und wobei die Phenylgruppe 1 bis 5 Halogenatome und/oder 1 bis 3 Substituenten aufweisen kann, die unabhängig voneinander ausgewählt sind unter Alkyl, Halogenalkyl, Alkoxy, Halogenalkoxy, Alkylthio und Halogenalkylthio, und wobei die amidische Phenylgruppe gegebenenfalls mit einem gesättigten 5-gliedrigen Ring kondensiert ist, der gegebenenfalls durch eine oder mehrere Alkylgruppen substituiert ist und/oder ein Heteroatom, ausgewählt unter O und S, aufweisen kann, und

b) Verbindungen der Formel III

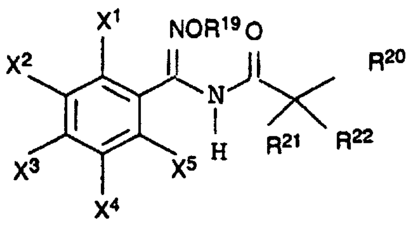

(III)

wobei die Substituenten $X^1$ bis $X^5$ und $R^{19}$ bis $R^{22}$ folgende Bedeutung haben:

$X^1$ bis $X^5$ unabhängig voneinander Wasserstoff, Halogen, $C_1$-$C_4$-Alkyl, $C_1$-$C_4$-Halogenalkyl, $C_1$-$C_4$-Alkoxy, $C_1$-$C_4$-Halogenalkoxy, $C_1$-$C_4$-Alkylthio, $C_1$-$C_4$-Thioalkoxy, $C_1$-$C_4$-Sulfonylalkyl, Nitro, Amino, N-$C_1$-$C_4$-Carboxylamino, N-$C_1$-$C_4$-Alkylamino;

$R^{19}$ $C_1$-$C_4$-Alkyl, $C_2$-$C_4$-Alkenyl, $C_2$-$C_4$-Alkinyl, $C_1$-$C_4$-Alkyl-$C_3$-$C_7$-Cycloalkyl, wobei diese Reste Substituenten ausgewählt aus Halogen, Cyano, und $C_1$-$C_4$-Alkoxy tragen können

$R^{20}$ einen Phenylrest oder einen 5- oder 6-gliedrigen gesättigten oder ungesättigten Heterocyclylrest mit mindestens einem Heteroatom ausgewählt aus der Gruppe N, O und S, wobei die cyclischen Reste einen bis drei Substituenten ausgewählt aus der Gruppe aus Halogen, $C_1$-$C_4$-Alkyl, $C_1$-$C_4$-Alkoxy, $C_1$-$C_4$-Halogenalkyl, $C_1$-$C_4$-Halogenalkoxy, $C_1$-$C_4$-Alkoxy-$C_2$-$C_4$-Alkenyl, $C_1$-$C_4$-Alkoxy-$C_2$-$C_4$-Alkinyl aufweisen können,

$R^{21}$ und $R^{22}$ unabhängig voneinander Wasserstoff, $C_1$-$C_4$-Alkyl, $C_1$-$C_4$-Alkoxy, $C_1$-$C_4$-Alkylthio, N-$C_1$-$C_4$-Alkylamino, $C_1$-$C_4$-Halogenalkyl oder $C_1$-$C_4$-Halogenalkoxy

in einer synergistisch wirksamen Menge.

**2.** Fungizide Mischung nach Anspruch 1, wobei in der Formel I der Rest A für eine der folgenden Gruppen steht:

Phenyl, Pyridyl, Dihydropyranyl, Dihydrooxathiinyl, Dihydrooxathiinyloxid, Dihydrooxathiinyldioxid, Furyl, Thiazolyl, Pyrazolyl oder Oxazolyl, wobei diese Gruppen 1, 2 oder 3 Substituenten aufweisen können, die unabhängig voneinander ausgewählt sind unter Alkyl, Halogen, Difluormethyl und Trifluormethyl.

**3.** Fungizide Mischung nach Anspruch 1, wobei in der Formel I der Rest A für eine der folgenden Gruppen steht:

Pyridin-3-yl, das gegebenenfalls in 2-Stellung durch Halogen, Methyl, Difluormethyl, Trifluormethyl, Methoxy, Methylthio, Methylsulfinyl oder Methylsulfonyl substituiert ist;

Phenyl, das gegebenenfalls in 2-Stellung durch Methyl, Trifluormethyl, Chlor, Brom oder Iod substituiert ist;

2-Methyl-5,6-dihydropyran-3-yl;

2-Methyl-5,6-dihydro-1,4-oxathiin-3-yl oder das 4-Oxid oder 4,4-Dioxid davon;

2-Methyl-furan-3-yl, das gegebenenfalls in 4- und/oder 5-Stellung durch Methyl substituiert ist;

Thiazol-5-yl, das gegebenenfalls in 2- und/oder 4-Stellung durch Methyl, Chlor, Difluormethyl oder Trifluormethyl substituiert ist;

Thiazol-4-yl, das gegebenenfalls in 2- und/oder 5-Stellung durch Methyl, Chlor, Difluormethyl oder Trifluormethyl substituiert ist;

1-Methylpyrazol-4-yl, das gegebenenfalls in 3- und/oder 5-Stellung durch Methyl, Chlor, Difluormethyl oder Trifluormethyl substituiert ist; oder

Oxazol-5-yl, das gegebenenfalls in 2- und/oder 4-Stellung durch Methyl oder Chlor substituiert ist.

**4.** Fungizide Mischung nach einem der vorhergehenden Ansprüche, welche eine Verbindung der Formel I enthält, worin $R^2$ für eine Phenylgruppe steht, die gegebenenfalls substituiert ist durch 1, 2 oder 3 der in Anspruch 1 genannten Substituenten.

**5.** Fungizide Mischung nach Anspruch 4, wobei $R^2$ für eine Phenylgruppe steht, die in 2-Stellung einen der folgenden Substituenten aufweist:

$C_3$-$C_6$-Alkyl, $C_5$-$C_6$-Cycloalkenyl, $C_5$-$C_6$-Cycloalkyloxy, Cycloalkenyloxy, wobei diese Gruppen durch 1, 2 oder 3 $C_1$-$C_4$-Alkylgruppen substituiert sein können,
Phenyl, das durch 1 bis 5 Halogenatome und/oder 1 bis 3 Gruppen, die unabhängig voneinander ausgewählt sind unter $C_1$-$C_4$-Alkyl, $C_1$-$C_4$-Halogenalkyl, $C_1$-$C_4$-Alkoxy, $C_1$-$C_4$-Halogenalkoxy, $C_1$-$C_4$-Alkylthio und $C_1$-$C_4$-Halogenalkylthio, substituiert ist,
oder wobei $R^2$ für Indanyl oder Oxaindanyl steht, das gegebenenfalls durch 1, 2 oder 3 $C_1$-$C_4$-Alkylgruppen substituiert ist.

**6.** Fungizide Mischung nach einem der Ansprüche 1 bis 5, welche eine Amidverbindung der nachfolgenden Formel Ia enthält:

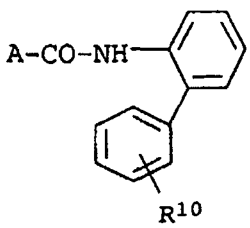

(Ia)

worin

A für

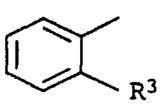

(A1)

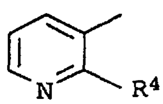

(A2)

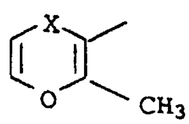

(A3)

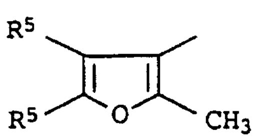

(A4)

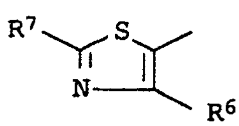

(A5)

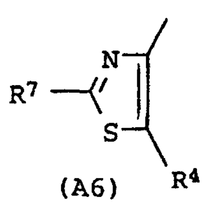

(A6)

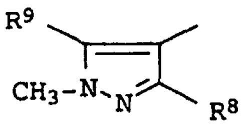

(A7)

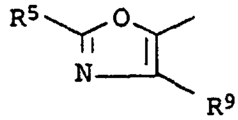

(A8)

steht;

- X für Methylen, Schwefel, Sulfinyl oder Sulfonyl ($SO_2$) steht,
- $R^3$ für Methyl, Difluormethyl, Trifluormethyl, Chlor, Brom oder Jod steht,
- $R^4$ für Trifluormethyl oder Chlor steht,
- $R^5$ für Wasserstoff oder Methyl steht,
- $R^6$ für Methyl, Difluormethyl, Trifluormethyl oder Chlor steht,
- $R^7$ für Wasserstoff, Methyl oder Chlor steht,
- $R^8$ für Methyl, Difluormethyl oder Trifluormethyl steht,
- $R^9$ für Wasserstoff, Methyl, Difluormethyl, Trifluormethyl oder Chlor steht,
- $R^{10}$ für $C_1$-$C_4$-Alkyl, $C_1$-$C_4$-Alkoxy, $C_1$-$C_4$-Alkylthio oder Halogen steht.

**7.** Fungizide Mischung nach einem der Ansprüche 1 bis 5, welche als Amidverbindung eine Verbindung der nachfolgenden Formel Ib enthält:

(Ib)

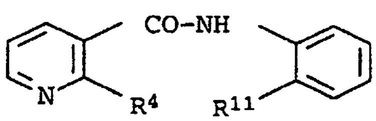

(Ib)

worin

- $R^4$ für Halogen steht und
- $R^{11}$ für Phenyl steht, das durch Halogen substituiert ist.

**8.** Fungizide Mischung nach Anspruch 1, welche als Amidverbindung eine Verbindung der nachfolgenden Formeln enthält:

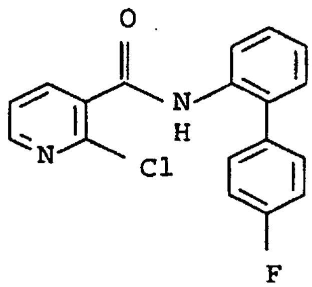

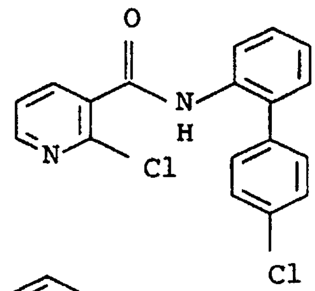

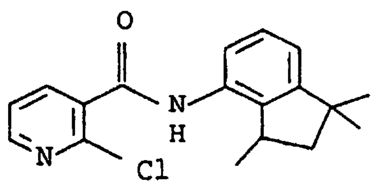

9. Fungizide Mischung nach einem der vorhergehenden Ansprüche, welche in zwei Teilen konditioniert ist, wobei der eine Teil die Amidverbindung I in einem festen oder flüssigen Träger enthält und der andere Teil die Verbindung III in einem festen oder flüssigen Träger enthält.

10. Verfahren zur Bekämpfung von Schadpilzen, **dadurch gekennzeichnet, daß** man die Pilze, deren Lebensraum oder die vor Pilzbefall zu schützenden Materialien, Pflanzen, Samen, Böden, Flächen oder Räume mit einer fungiziden Mischung gemäß einem der Ansprüche 1 bis 9 behandelt, wobei die Anwendung der Wirkstoffe Amidverbindung I und die Verbindungen III gleichzeitig, und zwar gemeinsam oder getrennt, oder nacheinander erfolgen kann.

## Claims

1. A fungicidal mixture, comprising as active components

a) an amide compound of the formula I

$$A\text{-}CO\text{-}NR^1R^2 \qquad I$$

in which

A is an aryl group or an aromatic or non-aromatic, 5- or 6-membered heterocycle which has from 1 to 3 hetero atoms selected from O, N and S;
where the aryl group or the heterocycle may or may not have 1, 2 or 3 substituents which are selected, independently of one another, from alkyl, halogen, $CHF_2$, $CF_3$, alkoxy, haloalkoxy, alkylthio, alkylsulfynyl and alkylsulfonyl;

$R^1$ is a hydrogen atom;

$R^2$ is a phenyl or cycloalkyl group which may or may not have 1, 2 or 3 substituents which are selected, independently of one another, from alkyl, alkenyl, alkynyl, alkoxy, alkenyloxy, alkynyloxy, cycloalkyl, cycloalkenyl, cycloalkyloxy, cycloalkenyloxy, phenyl and halogen, where the aliphatic and cycloaliphatic radicals may be partially or fully halogenated and/or the cycloaliphatic radicals may be substituted by from 1 to 3 alkyl groups and where the phenyl group may have from 1 to 5 halogen atoms and/or from 1 to 3 substituents which are selected, independently of one another, from alkyl, haloalkyl, alkoxy, haloalkoxy, alkylthio and haloalkylthio, and

where the amidic phenyl group may or may not be condensed with a saturated 5-membered ring which may

or may not be substituted by one or more alkyl groups and/or may have a hetero atom selected from O and S, and

b) compounds of the formula III

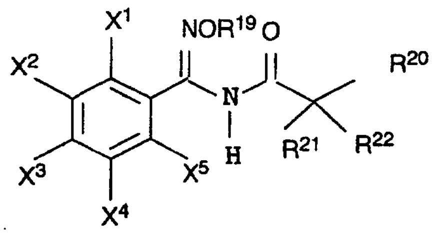

(III)

where the substituents $X^1$ to $X^5$ and $R^{19}$ to $R^{22}$ are as defined below:

$X^1$ to $X^5$ independently of one another are hydrogen, halogen, $C_1$-$C_4$-alkyl, $C_1$-$C_4$-haloalkyl, $C_1$-$C_4$-alkoxy, $C_1$-$C_4$-haloalkoxy, $C_1$-$C_4$-alkylthio, $C_1$-$C_4$-thioalkoxy, $C_1$-$C_4$-sulfonylalkyl, nitro, amino, N-$C_1$-$C_4$-carboxylamino, N-$C_1$-$C_4$-alkylamino;

$R^{19}$ is $C_1$-$C_4$-alkyl, $C_2$-$C_4$-alkenyl, $C_2$-$C_4$-alkynyl, $C_1$-$C_4$-alkyl-$C_3$-$C_7$-cycloalkyl, where these radicals may carry substituents selected from halogen, cyano and $C_1$-$C_4$-alkoxy;

$R^{20}$ is a phenyl radical or a 5- or 6-membered saturated or unsaturated heterocyclyl radical having at least one hetero atom selected from the group N, O and S, where the cyclic radicals may have from one to three substituents selected from the group consisting of halogen, $C_1$-$C_4$-alkyl, $C_1$-$C_4$-alkoxy, $C_1$-$C_4$-haloalkyl, $C_1$-$C_4$-haloalkoxy, $C_1$-$C_4$-alkoxy-$C_2$-$C_4$-alkenyl, $C_1$-$C_4$-alkoxy-$C_2$-$C_4$-alkynyl;

$R^{21}$ and $R^{22}$ independently of one another are hydrogen, $C_1$-$C_4$-alkyl, $C_1$-$C_4$-alkoxy, $C_1$-$C_4$-alkylthio, N-$C_1$-$C_4$-alkylamino, $C_1$-$C_4$-haloalkyl or $C_1$-$C_4$-haloalkoxy in a synergistically effective amount.

**2.** A fungicidal mixture as claimed in claim 1, wherein in the formula I the radical A is one of the following groups:

phenyl, pyridyl, dihydropyranyl, dihydrooxathiynyl, dihydrooxathiynyloxide, dihydrooxathiynyldioxide, furyl, thiazolyl, pyrazolyl or oxazolyl, where these groups may have 1, 2 or 3 substituents which are selected, independently of one another, from alkyl, halogen, difluoromethyl and trifluoromethyl.

**3.** A fungicidal mixture as claimed in claim 1, wherein in the formula I the radical A is one of the following groups:

pyridin-3-yl, which may or may not be substituted in the 2-position by halogen, methyl, difluoromethyl, trifluoromethyl, methoxy, methylthio, methylsulfynyl or methylsulfonyl;

phenyl, which may or may not be substituted in the 2-position by methyl, trifluoromethyl, chlorine, bromine or iodine;

2-methyl-5,6-dihydropyran-3-yl;

2-methyl-5,6-dihydro-1,4-oxathiyn-3-yl or the 4-oxide or 4,4-dioxide thereof;

2-methylfuran-3-yl, which may or may not be substituted in the 4- and/or 5-position by methyl;

thiazol-5-yl, which may or may not be substituted in the 2-and/or 4-position by methyl, chlorine, difluoromethyl or trifluoromethyl;

thiazol-4-yl, which may or may not be substituted in the 2-and/or 5-position by methyl, chlorine, difluoromethyl or trifluoromethyl;

1-methylpyrazol-4-yl, which may or may not be substituted in the 3- and/or 5-position by methyl, chlorine, difluoromethyl or trifluoromethyl; or

oxazol-5-yl, which may or may not be substituted in the 2-and/or 4-position by methyl or chlorine.

**4.** A fungicidal mixture as claimed in one of the preceding claims, which comprises a compound of the formula I in which $R^2$ is a phenyl group which may or may not be substituted by 1, 2 or 3 of the substituents mentioned in claim 1.

**5.** A fungicidal mixture as claimed in claim 4, where $R^2$ is a phenyl group which has one of the following substituents in the 2-position:

$C_3$-$C_6$-alkyl, $C_5$-$C_6$-cycloalkenyl, $C_5$-$C_6$-cycloalkyloxy, cycloalkenyloxy, where these groups may be substituted by 1, 2 or 3 $C_1$-$C_4$-alkyl groups,
phenyl which is substituted by from 1 to 5 halogen atoms and/or from 1 to 3 groups which are selected, independently of one another, from $C_1$-$C_4$-alkyl, $C_1$-$C_4$-haloalkyl,
$C_1$-$C_4$-alkoxy, $C_1$-$C_4$-haloalkoxy, $C_1$-$C_4$-alkylthio and
$C_1$-$C_4$-haloalkylthio,
or where $R^2$ is indanyl or oxaindanyl which may or may not be substituted by 1, 2 or 3 $C_1$-$C_4$-alkyl groups.

**6.** A fungicidal mixture as claimed in any of claims 1 to 5, which comprises an amide compound of the formula Ia below:

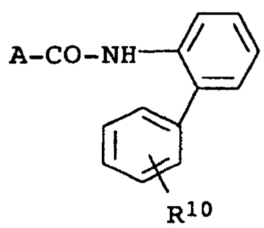

(Ia)

in which

A is

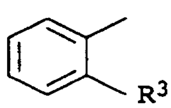

(A1)

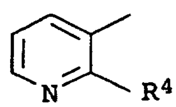

(A2)

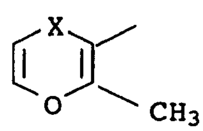

(A3)

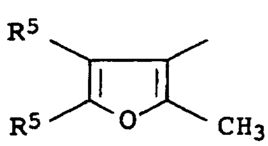

(A4)

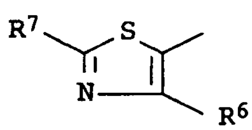

(A5)

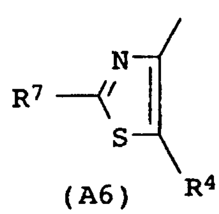

(A6)

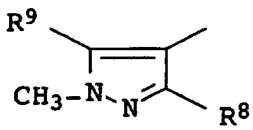

(A7)

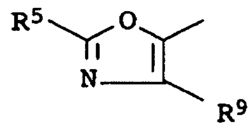

(A8)

X is methylene, sulfur, sulfynyl or sulfonyl ($SO_2$),

$R^3$ is methyl, difluoromethyl, trifluoromethyl, chlorine, bromine or iodine,

$R^4$ is trifluoromethyl or chlorine,

$R^5$ is hydrogen or methyl,

$R^6$ is methyl, difluoromethyl, trifluoromethyl or chlorine,

$R^7$ is hydrogen, methyl or chlorine,

$R^8$ is methyl, difluoromethyl or trifluoromethyl,

$R^9$ is hydrogen, methyl, difluoromethyl, trifluoromethyl or chlorine,

$R^{10}$ is $C_1$-$C_4$-alkyl, $C_1$-$C_4$-alkoxy, $C_1$-$C_4$-alkylthio or halogen.

**7.** A fungicidal mixture as claimed in any of claims 1 to 5, which comprises as amide compound a compound of the formula Ib below:

(Ib)

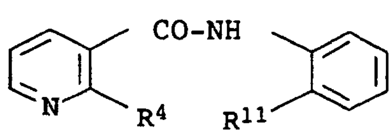

(Ib)

in which

$R^4$ is halogen and
$R^{11}$ is phenyl which is substituted by halogen.

**8.** A fungicidal mixture as claimed in claim 1, which comprises as amide compound a compound of the formulae below:

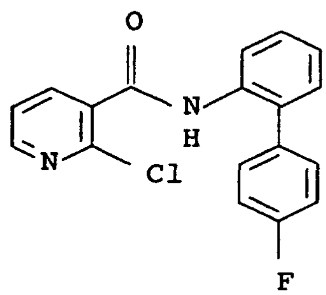

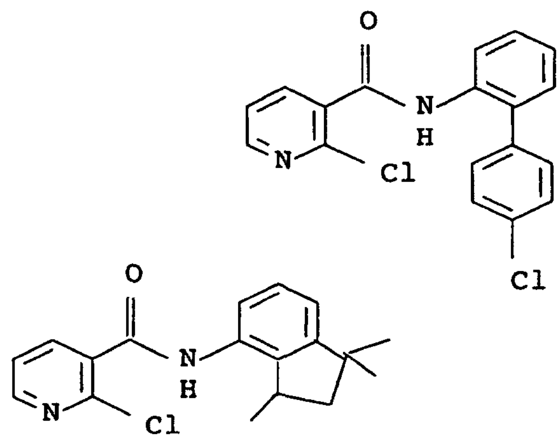

**9.** A fungicidal mixture as claimed in any of the preceding claims, which is conditioned in two parts, one part comprising the amide compound I in a solid or liquid carrier and the other part comprising the compound III in a solid or liquid carrier.

**10.** A method for controlling harmful fungi, which comprises treating the fungi, their habitat, or the materials, plants, seeds, soils, areas or spaces to be protected against fungal attack with a fungicidal mixture as claimed in any of claims 1 to 9, where the application of the active ingredients amide compound I and the compounds III may be carried out simultaneously, that is either together or separately, or in succession.

## Revendications

**1.** Mélanges fongicides, contenant en tant que composants actifs

a) un composé amide de formule I

$$A\text{-}CO\text{-}NR^1R^2 \qquad (I)$$

dans laquelle

A représente un groupe aryle ou hétérocycle à 5 ou 6 membres, aromatique ou non aromatique, qui présente de 1 à 3 hétéroatomes, qui sont choisis parmi O, N et S;
le groupe aryle ou l'hétérocycle pouvant présenter éventuellement 1, 2 ou 3 substituants, qui sont choisis indépendamment l'un de l'autre parmi un groupe alkyle, un atome d'halogène, un groupe $CHF_2$, $CF_3$, alcoxy, halogénoalcoxy, alkylthio, alkylsulfinyle, et alkylsulfonyle;

$R^1$ représente un atome d'hydrogène;

$R^2$ représente un groupe phényle ou cycloalkyle qui présente éventuellement 1, 2 ou 3 substituants, qui sont choisis indépendamment l'un de l'autre parmi un groupe alkyle, alcényle, alcynyle, alcoxy, alcényloxy, alcynyloxy, cycloalkyle, cycloalcényle, cycloalkyloxy, cycloalcényloxy, phényle et un atome d'halogène, les résidus aliphatiques et cycloaliphatiques pouvant être partiellement ou complètement halogénés et/ou les résidus cycloaliphatiques pouvant être substitués par 1 ou 3 groupes alkyle, et le groupe phényle pouvant présenter de 1 à 5 atomes d'halogène et/ou 1 à 3 substituants qui sont choisis indépendamment l'un de l'autre parmi un groupe alkyle, halogénoalkyle, alcoxy, halogénoalcoxy, alkylthio et halogénoalkylthio, et le groupe phényle amidique étant éventuellement condensé avec un cycle saturé à 5 membres, qui est éventuellement substitué par un ou plusieurs groupes alkyles, et/ou qui peut présenter un hétéroatome choisi parmi O et S, et

b) des composés de formule III

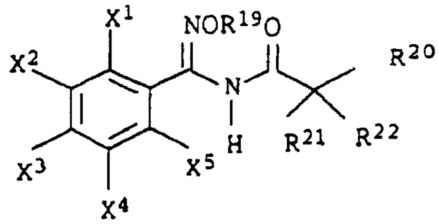

(III)

dans laquelle les substituants $X^1$ à $X^5$ et $R^{19}$ à $R^{22}$ prennent la signification suivante :

$X^1$ à $X^5$ représentent indépendamment l'un de l'autre un atome d'hydrogène, un atome d'halogène, un groupe alkyle en $C_1$ à $C_4$, halogénoalkyle en $C_1$ à $C_4$, alcoxy en $C_1$ à $C_4$, halogénoalcoxy en $C_1$ à $C_4$, alkylthio en $C_1$ à $C_4$, thioalcoxy en $C_1$ à $C_4$, sulfonylalkyle en $C_1$ à $C_4$, nitro, amino, N-carboxylamino en $C_1$ à $C_4$, N-alkylamino en $C_1$ à $C_4$;

$R^{19}$ représente un groupe alkyle en $C_1$ à $C_4$, alcényle en $C_2$ à $C_4$, alcynyle en $C_2$ à $C_4$, (alkyle en $C_1$ à $C_4$)-(cycloalkyle en $C_3$ à $C_7$), ces résidus pouvant porter des substituants choisis parmi un atome d'halogène, un groupe cyano et alcoxy en $C_1$ à $C_4$,

$R^{20}$ représente un résidu phényle ou un résidu hétérocyclique saturé ou insaturé de 5 ou 6 membres ayant au moins un hétéroatome choisi dans le groupe formé par N, O et S, les restes cycliques pouvant présenter de 1 à 3 substituants choisis dans le groupe formé par un atome d'halogène, un groupe alkyle en $C_1$ à $C_4$, alcoxy en $C_1$ à $C_4$, halogénoalkyle en $C_1$ à $C_4$, halogénoalcoxy en $C_1$ à $C_4$, (alcoxy en $C_1$ à $C_4$)-(alcényle en $C_2$ à $C_4$), (alcoxy en $C_1$ à $C_4$)-(alcynyle en $C_2$ à $C_4$),

$R^{21}$ et $R^{22}$ représentent indépendamment l'un de l'autre, un atome d'hydrogène, un groupe alkyle en $C_1$ à $C_4$, alcoxy en $C_1$ à $C_4$, alkylthio en $C_1$ à $C_4$, N-alkylamino en $C_1$ à $C_4$, halogénoalkyle en $C_1$ à $C_4$, ou halogénoalcoxy en $C_1$ à $C_4$,

en une quantité synergiquement efficace.

**2.** Mélange fongicide selon la revendication 1, dans lequel le résidu A dans la formule I représente un des groupes suivants :

phényle, pyridyle, dihydropyranyle, dihydrooxathiinyle, oxyde de dihydrooxathiinyle, dioxyde de dihydrooxathiinyle, furyle, thiazolyle, pyrazolyle ou oxazolyle, ces groupes pouvant présenter 1, 2 ou 3 substituants qui sont choisis indépendamment l'un de l'autre parmi un groupe alkyle, un atome d'halogène, un groupe difluorométhyle, et trifluorométhyle.

**3.** Mélange fongicide selon la revendication 1, dans lequel le résidu A dans la formule I représente un des groupes suivants :

pyridin-3-yle, qui est substitué éventuellement dans la position 2 par un atome d'halogène, un groupe méthyle, difluorométhyle, trifluorométhyle, méthoxy, méthylthio, méthylsulfinyle ou méthylsulfonyle;
phényle, qui est éventuellement substitué dans la position 2 par un groupe méthyle, trifluorométhyle, un atome de chlore, de brome ou d'iode;
2-méthyl-5,6-dihydropyran-3-yle;
2-méthyl-5,6-dihydro-1,4-oxathiinyl-3-yle ou le 4-oxyde ou 4,4-dioxyde de celui-ci;
2-méthyl-furan-3-yle, qui est substitué éventuellement dans la position 4 et/ou 5 par un groupe méthyle;
thiazol-5-yle, qui est substitué éventuellement dans la position 2 et/ou 4 par un groupe méthyle, un atome de chlore, difluorométhyle ou trifluorométhyle;
thiazol-4-yle, qui est substitué éventuellement dans la position 2 et/ou 5 par un groupe méthyle, un atome de chlore, un groupe difluorométhyle, ou trifluorométhyle;
1-méthyl-pyrazol-4-yle, qui est substitué éventuellement dans la position 3 et/ou 5 par un groupe méthyle, un atome de chlore, un groupe difluorométhyle, ou trifluorométhyle; ou
oxazol-5-yle, qui est substitué éventuellement dans la position 2 et/ou 4 par un groupe méthyle ou un atome de chlore.

**4.** Mélange fongicide selon l'une quelconque des revendications précédentes, lequel contient un composé de formule

I, dans laquelle $R^2$ représente un groupe phényle qui est éventuellement substitué par 1, 2 ou 3 des substituants cités dans la revendication 1.

**5.** Mélange fongicide selon la revendication 4, dans lequel $R^2$ représente un groupe phényle, qui présente dans la position 2 l'un des substituants suivants :

un groupe alkyle en $C_3$ à $C_6$, cycloalcényle en $C_5$ à $C_6$, cycloalkyloxy en $C_5$ à $C_6$, cycloalcényloxy, ces groupes pouvant être substitués par 1, 2 ou 3 groupes alkyle en $C_1$ à $C_4$,
un groupe phényle, qui est substitué par 1 à 5 atomes d'halogène et/ou par 1 à 3 groupes qui sont choisis indépendamment l'un de l'autre parmi un groupe alkyle en $C_1$ à $C_4$, halogénoalkyle en $C_1$ à $C_4$, alcoxy en $C_1$ à $C_4$, halogénoalcoxy en $C_1$ à $C_4$, alkylthio en $C_1$ à $C_4$, et halogénoalkylthio en $C_1$ à $C_4$,
ou dans lequel $R^2$ représente un groupe indanyle ou oxaindanyle qui est substitué éventuellement par 1, 2 ou 3 groupes alkyle en $C_1$ à $C_4$.

**6.** Mélange fongicide selon l'une quelconque des revendications 1 à 5, lequel contient un composé amide de formule suivante la :

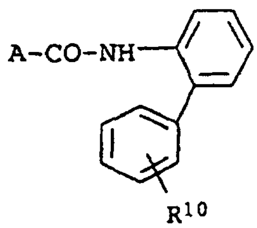

(Ia)

dans laquelle

A représente

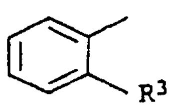

(A1)

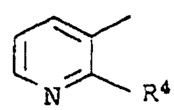

(A2)

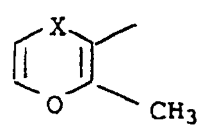

(A3)

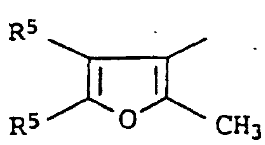

(A4)

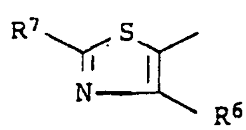

(A5)

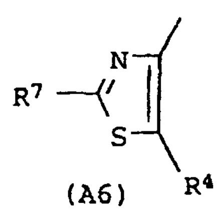

(A6)

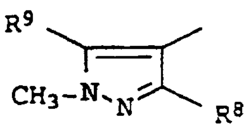

(A7)

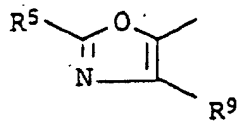

(A8)

X représente un groupe méthylène, un atome de soufre, un groupe sulfinyle, ou sulfonyle ($SO_2$),
$R^3$ représente un groupe méthyle, difluorométhyle, trifluorométhyle, un atome de chlore, de brome, ou d'iode,
$R^4$ représente un groupe trifluorométhyle ou un atome de chlore,
$R^5$ représente un atome d'hydrogène ou un groupe méthyle,
$R^6$ représente un groupe méthyle, difluorméthyle, trifluorométhyle ou un atome de chlore,
$R^7$ représente un atome d'hydrogène, un groupe méthyle ou un atome de chlore,
$R^8$ représente un groupe méthyle, difluorométhyle ou trifluorométhyle,
$R^9$ représente un atome d'hydrogène, un groupe méthyle, difluorométhyle, trifluorométhyle, ou un atome de chlore,
$R^{10}$ représente un groupe alkyle en $C_1$ à $C_4$, alcoxy en $C_1$ à $C_4$, alkylthio en $C_1$ à $C_4$, ou un atome d'halogène.

**7.** Mélange fongicide selon l'une quelconque des revendications 1 à 5, lequel contient en tant que composé amide, un composé de formule suivante Ib :

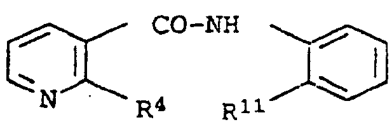

(Ib)

dans laquelle

$R^4$ représente un atome d'halogène et
$R^{11}$ représente un groupe phényle qui est substitué par un atome d'halogène.

**8.** Mélange fongicide selon la revendication 1, lequel contient en tant que composé amide, un composé des formules suivantes :

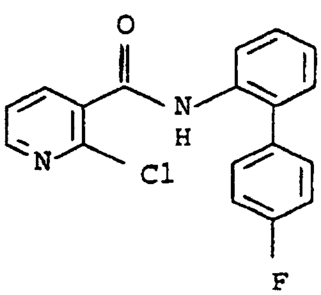

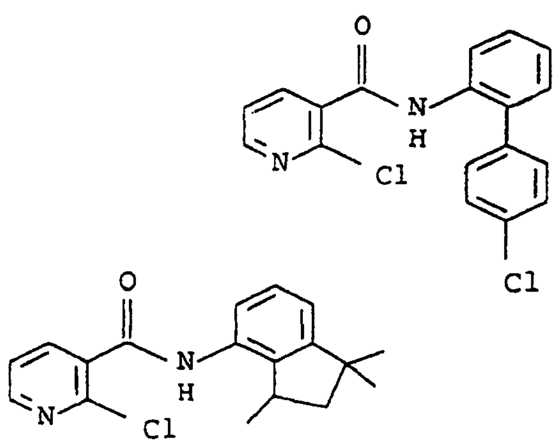

**9.** Mélange fongicide selon l'une quelconque des revendications précédentes, lequel est conditionné en deux parties, l'une des parties contenant le composé amide I dans un véhicule solide ou liquide et l'autre partie contenant le composé III dans un véhicule solide ou liquide.

**10.** Procédé de lutte contre les champignons nuisibles, **caractérisé en ce que**, on traite les champignons, leurs biotopes ou les matériaux, les plantes, semences, sols, surfaces ou espaces, à protéger contre un envahissement par des champignons, par un mélange fongicide selon l'une quelconque des revendications 1 à 9, l'application des substances actives, du composé amide I et des composés III pouvant se réaliser simultanément, c'est-à-dire conjointement ou séparément, ou successivement.